# EUROPEAN PATENT SPECIFICATION

(11) **EP 2 868 763 B1**
(45) Date of publication and mention of the grant of the patent: **18.04.2018**
(21) Application number: 12880052.1
(22) Date of filing: 28.06.2012
(51) Int. Cl.: C22C 38/00, C21D 9/08, C22C 38/06, C22C 38/38, B21B 17/14, C21D 8/10, C22C 38/02, C22C 38/04, B23K 11/08, B23K 11/16, B23K 13/02

(54) **HIGH CARBON STEEL PIPE HAVING EXCELLENT COLD WORKABILITY, MACHINABILITY, AND QUENCHING PROPERTIES, AND METHOD FOR MANUFACTURING SAME**
HOCHKOHLENSTOFFHALTIGES STAHLROHR MIT AUSGEZEICHNETEN KALTVERFORMBARKEITS-, BEARBEITBARKEITS- UND ABSCHRECKUNGSEIGENSCHAFTEN UND VERFAHREN ZUR HERSTELLUNG DAVON
TUBE D'ACIER À HAUTE TENEUR EN CARBONE DE CAPACITÉ D'ÉCROUISSAGE, D'USINABILITÉ ET DE TREMPABILITÉ EXCELLENTES, AINSI QUE PROCÉDÉ DE FABRICATION DE CELUI-CI

(43) Date of publication of application: 06.05.2015
(73) Proprietor: JFE Steel Corporation, Tokyo, 100-0011 (JP)
(72) Inventor: ARATANI, Masatoshi, Tokyo 100-0011 (JP); TOYODA, Shunsuke, Tokyo 100-0011 (JP); OKABE, Takatoshi, Tokyo 100-0011 (JP); KAWABATA, Yoshikazu, Tokyo 100-0011 (JP); IWAZAKI, Kenichi, Tokyo 100-0011 (JP)
(74) Representative: Grünecker Patent- und Rechtsanwälte PartG mbB
(86) International application number: PCT/JP2012/067138
(87) International publication number: WO 2014/002289

(56) References cited:
- EP-A1- 1 293 581
- EP-A1- 1 437 422
- WO-A1-2011/093319
- JP-A- 2001 355 046
- JP-A- 2004 353 028
- JP-A- 2006 152 406
- JP-A- 2006 316 291
- JP-A- 2009 275 250
- US-A1- 2003 044 638

## Description

### [Technical Field]

The present invention relates to high-carbon steel tubes suitable for automotive parts such as steering rack bars mounted in automotive rack-and-pinion type steering devices or the like, steering shafts and drive shafts, and methods for manufacturing such high-carbon steel tubes, and particularly to improvements in cold workability, machinability, and hardenability.

### [Background Art]

There has recently been a strong need for improved automobile mileage for the conservation of the global environment. Accordingly, efforts have been made to reduce the weight of automotive bodies. The need for a reduction in the weight of automotive bodies has prompted the replacement of solid-core parts made of steel bars with hollow parts made of steel tubes in the field of steering-associated parts such as steering rack bars and steering shafts for mounting in steering devices, which transfer the motion of an automotive steering wheel to wheels, and driveshaft-associated parts such as drive shafts, which transfer the power of an engine to wheels.

Raw steel tubes used for making parts such as steering rack bars, steering shafts, and drive shafts are subjected to cold working processes such as cold drawing working, cold pressing, and cold forging and are then subjected to cutting work to be cut into the final part shape, often followed by quenching treatment to achieve a predetermined strength required of the parts.

For example, a hollow steering rack bar disclosed in Non Patent Literature 1 is manufactured by providing a high-carbon steel tube as a raw steel tube, forming a flat part on the upper side of the tube by a cold process, and cutting gear teeth in the flat part into the final shape, followed by high-frequency hardening to achieve a predetermined strength. Thus, a raw steel tube used for making a hollow steering rack bar is subjected to cold working, cutting, and quenching treatment. This requires the steel tube to have superior cold workability, machinability, and hardenability.

To achieve a predetermined strength of parts after quenching treatment, a raw steel tube having a high carbon content needs to be used. A high carbon content, however, deteriorates the cold workability. Accordingly, in the related art, a high-carbon steel is subjected to spheroidizing annealing to achieve decreased strength. Spheroidizing annealing, however, involves heat treatment at about 700°C for an extended period of time, i.e., several hours. This causes the problem of decreased productivity and increased production costs.

To address this problem, for example, Patent literature 1 discloses a method for manufacturing a steel bar having a spheroidized microstructure. This method includes heating a steel containing 2 mass% or less carbon to the Ac₁ point or higher, cooling the steel to the temperature range of (Ar₁ - 50°C) to (Ar₁ - 200°C) before finish rolling during hot rolling, finish-rolling the steel to cause a plastic deformation of 10% or more so that the resulting heat of deformation heats the steel again to the temperature range of the Ac₃ point to Ac₁ - 100°C, and maintaining the steel in the temperature range of the Ae₁ point to 500°C for 7 minutes or more. The technique disclosed in Patent literature 1 is intended to form spheroidized carbide by forming carbide before finish rolling, deforming and crushing the carbide by finish rolling while dividing the carbide by heating with the heat of deformation, and subsequently cooling and maintaining the carbide at constant temperature. Thus, the technique disclosed in Patent literature 1 allows an as-rolled steel to have a spheroidized microstructure. This considerably reduces the time for subsequent spheroidizing annealing and may eliminate the need for spheroidizing annealing, depending on the application.

Patent literature 2 discloses a method for manufacturing an electric-resistance-welded steel tube with superior cold workability and hardenability. This method includes heating a steel tube containing, by mass, 0.25% to 0.50% carbon, 0.35% or less silicon, 0.60% to 1.59% manganese, 0.0025% or less sulfur, and 0.010% or less phosphorus to (Ac₁ transformation temperature - 20°C) to (Ac₁ transformation temperature), maintaining the steel at that temperature for a predetermined period of time, and cooling the steel in air, or heating the steel to (Ac₁ transformation temperature) to (Ac₁ transformation temperature + 30°C), maintaining the steel at that temperature for a predetermined period of time, cooling the steel to (Ar₁ transformation point - 20°C) to (Ar₁ transformation point) at 0.01°C/s to 1.0°C/s, and cooling the steel in air, or maintaining the steel at that temperature for a predetermined period of time and cooling the steel in air. According to Patent literature 2, this technique provides an electric-resistance-welded steel tube having good cold workability and good hardenability that allows for a sufficient increase in strength after quenching.

Patent literature 3 discloses a method for manufacturing a steel tube with improved cold workability and high-frequency hardenability. This method includes heating or soaking a raw steel tube having a composition containing, by mass, 0.3% to 0.8% carbon, 2% or less silicon, and 3% or less manganese and then drawing the steel tube to a cumulative reduction in diameter of 30% or more within the temperature range of (Ac₁ transformation point - 50°C) to the Ac₁ transformation point to form a microstructure containing cementite grains having grain sizes of 1.0 µm or less. EP1437422, JP2004353028 and WO2011093319 disclose high-carbon steel tubes with specific compositions and production methods.

### [Citation List]

### [Patent Literature]

PTL 1: Japanese Examined Patent Application Publication No. 05-76524
PTL 2: Japanese Unexamined Patent Application Publication No. 2006-9141
PTL 3: Japanese Unexamined Patent Application Publication No. 2001-355047

### [Non Patent Literature]

NPL 1: Inoue, Sumitomo Metal, vol. 48, No. 4(1996), p. 29

### [Summary of Invention]

### [Technical Problem]

However, the technique disclosed in Patent literature 1 leaves the problems to be solved, including deteriorated high-frequency hardenability due to spheroidized carbide and a shortened cutting tool life and poor finished surface due to increased cutting resistance. Although the technique disclosed in Patent literature 2 provides improved cold workability and hardenability, it leaves the problems due to deteriorated machinability to be solved, including a shortened cutting tool life and poor finished surface due to increased cutting resistance.

In Patent literature 3, there is no discussion of the machinability in the technique disclosed in this patent. In the present application, to achieve improved machinability, it is important that the grain size of and the dispersion distance between cementite grains fall within their respective appropriate ranges. Accordingly, stretch-reducing rolling is performed at the Ac₁ transformation point or higher, preferably at a temperature higher than the Ac₁ transformation point but not higher than 900°C. In contrast, Patent literature 3 discloses that stretch-reducing rolling is performed in the range of (Ac₁ transformation point - 50°C) to the Ac₁ transformation point. This leaves the problem of insufficient machinability to be solved.

An object of the present invention is to advantageously solve the foregoing problems in the related art and provide a high-carbon electric-resistance-welded steel tube that has all of superior cold workability, machinability, and hardenability and a method for manufacturing such a high-carbon electric-resistance-welded steel tube. The term "superior cold workability" as used herein refers to an elongation El before quenching of 40% or more.

### [Solution to Problem]

To achieve the foregoing object, the inventors have conducted extensive research on the influence of various factors on the cold workability, machinability, and hardenability of high-carbon electric-resistance-welded steel tubes. Through this research, the inventors have discovered that, among various microstructure factors, the grain size of and dispersion spacing between cementite grains precipitated and dispersed in a ferrite base are important factors that affect the cold workability, machinability, and hardenability, particularly the machinability, of a high-carbon steel tube. The term "ferrite" as used herein refers to granular ferrite (also referred to as "polygonal ferrite").

In a mixed microstructure of ferrite and cementite, voids tend to form in ferrite-cementite interfaces after plastic deformation, particularly during cutting, because they differ in plastic deformability. These voids may cause cementite to peel or may coalesce into a crack. Such peeling of cementite or coalescence of voids would result in a poor finished surface and thus deteriorate the machinability. After further research, the inventors have found that there were the grain size of and dispersion spacing between cementite grains that cause no peeling of cementite or coalescence of voids during cutting. The inventors have discovered that controlling the grain size of and dispersion spacing between cementite grains within their respective appropriate ranges provides an excellent finished surface and thus significantly improves the machinability without peeling of cementite or coalescence of voids during cutting.

The inventors have also discovered that good machinability is achieved if the average grain size of cementite grains is 0.1 to less than 0.5 µm and the dispersion spacing between the surfaces of adjacent cementite grains is 0.5 to 10 µm. The inventors have discovered that a high-carbon steel tube having a microstructure in which such cementite grains are dispersed has all of superior cold workability, superior machinability and superior hardenability.

After further research, the inventors have discovered that, to provide a high-carbon electric-resistance-welded steel tube having a microstructure containing cementite grains having a grain size and a dispersion spacing within their respective appropriate ranges described above, it is important to heat a high-carbon steel tube to the Ac₃ transformation point or higher and then subject it to stretch-reducing rolling at a finishing temperature of rolling of 900°C to (Ac₁ transformation point) with a cumulative rolling reduction of 30% to 70% within the temperature range of 900°C or lower.

The present invention has been made based on the foregoing discoveries and additional research. Specifically, a summary of the present invention is as follows.
(1) A high-carbon steel tube with superior cold workability, machinability, and hardenability has a composition containing, by mass, 0.25% to 0.60% carbon, 0.01% to 2.0% silicon, 0.2% to 3.0% manganese, 0.001% to 0.1% aluminum, 0.001% to 0.05% phosphorus, 0.02% or less sulfur, 0.0010% to 0.0100% nitrogen, 0.0003% to 0.0050% boron, and 0.0001% to 0.0050% calcium, optionally at least one selected from 2.0% or less copper,2.0% or less chromium,2.0% or less molybdenum,2.0% or less tungsten, 1.0% or less vanadium, 0.1% or less niobium, and 0.1% or less titanium, the balance being iron and incidental impurities. The high-carbon steel tube has a microstructure containing a ferrite base phase, wherein the area fraction of ferrite is 50% or more, and cementite grains dispersed in the base phase. The average grain size d of the cementite grains is 0.1 to less than 0.5 µm, and the average distance L between surfaces of adjacent cementite grains is 0.5 to 10 µm.
(2) A method for manufacturing a high-carbon steel tube with superior cold workability, machinability, and hardenability includes providing a high-carbon steel tube as a raw steel tube, heating and soaking the raw steel tube, and subjecting the raw steel tube to stretch-reducing rolling into a product steel tube. The raw steel tube is a high-carbon steel tube having a composition according to (1) above. The raw steel tube is heated to and soaked for 0.1 to 10 minutes at an Ac₃ transformation point or higher and is then subjected to stretch-reducing rolling at a finishing temperature of rolling of 900°C to (Ac₁ transformation point) with a cumulative reduction in diameter of 30% to 70% within the temperature range of 900°C or lower.
(3) In the method for manufacturing a high-carbon steel tube according to Item (2), the high-carbon steel tube is a high-carbon electric-resistance-welded steel tube formed by a tube-making process including continuously roll-forming a high-carbon steel strip having the composition into a substantially cylindrical open pipe and joining together ends of the open pipe by electric resistance welding.

The present invention has an industrially significant advantage in that a high-carbon steel tube that has superior cold workability comparable to or higher than that of a steel tube subjected to spheroidizing annealing as well as superior machinability and high-frequency hardenability and that is suitable for automotive parts such as steering rack bars, steering shafts, and drive shafts can be easily manufactured at low cost without spheroidizing annealing. The present invention also has an advantage in that it contributes to a reduction in the weight of automotive bodies and thus contributes to the conservation of the global environment.

### [Description of Embodiments]

The reasons for the limitations on the composition of a high-carbon steel tube according to the present invention will be described first. In the following description, percentages are by mass unless otherwise stated.

### 0.25% to 0.60% Carbon

Carbon is an element that functions to increase the quench hardness and is therefore important for providing the desired strength parts. To achieve this effect, a carbon content of 0.25% or more is necessary. A carbon content of more than 0.60%, however, would significantly deteriorate the cold workability and would also deteriorate the weldability, which, if electric resistance welding is performed, would result in a poor quality of electric resistance weld. Thus, the carbon content is limited to the range of 0.25% to 0.60%. A carbon content of 0.30% to 0.50% is preferred.

### 0.01% to 2.0% Silicon

Silicon is an element that functions as a deoxidizing agent and also contributes to increased strength by forming a solid solution. To achieve these effects, a silicon content of 0.01% or more is necessary. A silicon content of more than 2.0%, however, would deteriorate the cold workability and, if electric resistance welding is performed, would also result in a poor quality of electric resistance weld because its oxide would form during electric resistance welding and remain after upsetting. Thus, the silicon content is limited to the range of 0.01% to 2.0%. A silicon content of 0.1% to 0.5% is preferred.

### 0.2% to 3.0% Manganese

Manganese is an element that improves the hardenability and also contributes to increased strength by forming a solid solution. To achieve these effects, a manganese content of 0.2% or more is necessary. A manganese content of more than 3.0%, however, would deteriorate the cold workability and, if electric resistance welding is performed, would also result in a poor quality of electric resistance weld because manganese oxide tends to remain in the electric resistance weld. Thus, the manganese content is limited to the range of 0.2% to 3.0%. A manganese content of 0.5% to 2.0% is preferred.

### 0.001% to 0.1% Aluminum

Aluminum is an element that functions effectively as a deoxidizing agent. To achieve this effect, an aluminum content of 0.001% or more is necessary. An aluminum content of more than 0.1%, however, would result in the formation of more alumina-based inclusions, which would degrade the surface properties. Thus, the aluminum content is limited to the range of 0.001% to 0.1%. An aluminum content of 0.01% to 0.05% is preferred.

### 0.001% to 0.05% Phosphorus

Phosphorus is an element that contributes to increased strength, and this effect is particularly remarkable when phosphorus is present in an amount of 0.001% or more. Phosphorus, however, tends to segregate, and a phosphorus content of more than 0.05% would result in noticeable grain boundary segregation and center segregation. This would deteriorate the ductility and would also significantly deteriorate the weldability. Thus, the phosphorus content is limited to the range of 0.001% to 0.05%. A phosphorus content of 0.001% to 0.02% is preferred.

### 0.02% or Less Sulfur

Whereas it is desirable to minimize the sulfur content because sulfur is present in the steel as sulfide-based inclusions that are likely to form origins of cracking during forming, a sulfur content of 0.02% or less is acceptable. Thus, the sulfur content is limited to 0.02% or less. A sulfur content of 0.01% or less is preferred. Also, a sulfur content of 0.0001% or more is preferred because excessively reducing the sulfur content would involve high refining costs.

### 0.0010% to 0.0100% Nitrogen

Nitrogen is an element that contributes to increased strength by forming a solid solution. To achieve this effect, a nitrogen content of 0.0010% or more is necessary. A nitrogen content of more than 0.0100%, however, would deteriorate the workability. Thus, the nitrogen content is limited to the range of 0.0010% to 0.0100%. A nitrogen content of 0.0050% or less is preferred.

### 0.0003% to 0.0050% Boron

Boron is an element that significantly improves the hardenability of the steel by segregating at grain boundaries, even when it is contained in small amounts. To achieve this effect, a boron content of 0.0003% or more is necessary. A boron content of more than 0.0050%, however, is economically disadvantageous since it would not have a greater effect commensurate with the content thereof and would also promote intergranular fractures by segregating at grain boundaries in large amounts. Thus, the boron content is limited to the range of 0.0003% to 0.0050%. A boron content of 0.0005% to 0.0030% is preferred.

### 0.0001% to 0.0050% Calcium

Calcium is an element that contributes effectively to morphology control of inclusions by forming spherical nonmetallic inclusions (sulfide-based inclusions). The formation of spherical nonmetallic inclusions alleviates stress concentration around the nonmetallic inclusions and thus reduces origins of cracking during forming and origins of cracking at fatigue failure. To achieve this effect, a calcium content of 0.0001% or more is necessary. A calcium content of more than 0.0050%, however, would result in the formation of more nonmetallic inclusions, which would deteriorate the cleanliness of the steel. Thus, the calcium content is limited to the range of 0.0001% to 0.0050%. A calcium content of 0.0001% to 0.0030% is preferred.

The composition described above is the basic composition. In addition to the basic composition, the high-carbon steel tube according to the present invention may further contain, as optional constituents, at least one selected from 2.0% or less copper, 2.0% or less chromium, 2.0% or less molybdenum, 2.0% or less tungsten, 1.0% or less vanadium, and 0.1% or less niobium, and/or 0.1% or less titanium.
At Least One Selected from 2.0% or Less Copper, 2.0% or Less Chromium, 2.0% or Less Molybdenum, 2.0% or Less Tungsten, 1.0% or Less Vanadium, and 0.1% or Less Niobium

The high-carbon steel tube may optionally contain at least one selected from copper, chromium, molybdenum, tungsten, vanadium, and niobium, all of which are elements that contribute to increased steel strength.

Copper is an element that contributes to increased strength by improving the hardenability and is therefore effective in improving the fatigue resistance. To achieve this effect, a copper content of 0.01% or more is preferred. A copper content of more than 2.0%, however, would significantly deteriorate the cold workability. Thus, if the high-carbon steel tube contains copper, the copper content is preferably limited to 2.0% or less. A copper content of 0.1% to 1.0% is more preferred.

Chromium is an element that contributes to increased strength by improving the hardenability. To achieve this effect, a chromium content of 0.01% or more is preferred. Chromium, however, tends to form oxide, and in the case that electric resistance welding is performed, a chromium content of more than 2.0% would result in a poor quality of electric resistance weld because chromium oxide tends to remain in the electric resistance weld. Thus, if the high-carbon steel tube contains chromium, the chromium content is preferably limited to the range of 2.0% or less. A chromium content of 0.1% to 1.0% is more preferred.

Molybdenum is an element that contributes to increased strength by improving the hardenability and promoting precipitation strengthening with carbide and is therefore effective in improving the fatigue resistance. To achieve this effect, a molybdenum content of 0.01% or more is preferred. A molybdenum content of more than 2.0%, however, would significantly deteriorate the cold workability. A high molybdenum content would also involve high material costs. Thus, if the high-carbon steel tube contains molybdenum, the molybdenum content is preferably limited to 2.0% or less. A molybdenum content of 0.1% to 0.5% is more preferred.

Tungsten is an element that contributes to increased strength by promoting precipitation strengthening with carbide. To achieve this effect, a tungsten content of 0.01% or more is preferred. A tungsten content of more than 2.0%, however, would result in the precipitation of excess carbide, which would deteriorate the cold workability. A high tungsten content would also involve high material costs. Thus, if the high-carbon steel tube contains tungsten, the tungsten content is preferably limited to 2.0% or less. A tungsten content of 0.1% to 0.5% is more preferred.

Vanadium is an element that contributes to increased strength by promoting precipitation strengthening with carbide and also improves the temper softening resistance. To achieve these effects, a vanadium content of 0.01% or more is preferred. A vanadium content of more than 1.0%, however, is economically disadvantageous since it would not have any greater effect. A high vanadium content would also deteriorate the cold workability. Thus, if the high-carbon steel tube contains vanadium, the vanadium content is preferably limited to 1.0% or less. A vanadium content of 0.1% to 0.5% is more preferred.

Niobium is an element that contributes to increased strength by improving the hardenability and promoting precipitation strengthening with carbide. To achieve this effect, a niobium content of 0.0010% or more is preferred. A niobium content of more than 0.1%, however, is economically disadvantageous since it would not have any greater effect. A high niobium content would also deteriorate the cold workability. Thus, if the high-carbon steel tube contains niobium, the niobium content is preferably limited to 0.1% or less. A niobium content of 0.0010% to 0.05% is more preferred.

### 0.1% or less Titanium

The high-carbon steel tube may optionally contain titanium, which is an element that functions to inhibit coarsening of crystal grains during heat treatment by forming carbide and nitride. To achieve this effect, a titanium content of 0.001% or more is preferred. A titanium content of more than 0.1%, however, would deteriorate the cold workability. Thus, if the high-carbon steel tube contains titanium, the titanium content is preferably limited to 0.1% or less. A titanium content of 0.0010% to 0.05% is more preferred.

The balance is iron and incidental impurities. The high-carbon steel tube may contain 0.01% or less oxygen as an incidental impurity.

The reasons for the limitations on the microstructure of the high-carbon steel tube according to the present invention will then be described.

The high-carbon steel tube according to the present invention has a microstructure containing a ferrite base phase in which cementite grains having an average grain size within a predetermined range are dispersed at a spacing within a predetermined range. Spheroidizing cementite grains tends to improve the cold workability.

The term "ferrite base phase" means that the area fraction of ferrite phase is larger than the area of any other phase as determined by corroding a cross-section (L cross-section) parallel to the longitudinal direction of the tube or a cross-section (C cross-section) parallel to the circumferential direction of the tube with a nital corrosion solution and analyzing an image of the metal microstructure captured under a light microscope or a scanning microscope.

Specifically, the area fraction of ferrite is 50% or more, preferably 60% or more. The total area fraction of phases other than ferrite, including pearlite, bainite, and cementite, is 40% or less, preferably 30% or less. The term "ferrite" as used herein refers to granular ferrite (also referred to as "polygonal ferrite") and differs from "bainitic ferrite".

Further, the above microstructure in which the cementite grains are dispersed is a microstructure in which the average grain size d of the cementite grains is 0.1 µm to less than 0.5 µm and the average distance L between the surfaces of the adjacent cementite grains is 0.5 µm to 10 µm. Average Grain Size d of Cementite Grains: 0.1 µm to Less Than 0.5 µm

Excessively fine cementite grains, i.e., cementite grains having an average grain size d of less than 0.1 µm, would not allow the cold workability to be sufficiently improved. Large cementite grains, i.e., cementite grains having an average grain size d of not less than 0.5 µm, would not dissolve sufficiently during quench heating (high-frequency heating) and thus deteriorate the hardenability. As a result, the desired quenching hardness (product hardness) would not be provided. Excessively large cementite grains would also increase the resistance during cutting (cutting resistance) and thus shorten the life of a cutting tool. Thus, the average grain size d of the cementite grains is limited to the range of 0.1 to less than 0.5 µm. An average grain size d of 0.3 to less than 0.5 µm is preferred. The average grain size d of the cementite grains is measured as described in the Examples.

### Average Distance L between Surfaces of Adjacent Cementite Grains: 0.5 to 10 µm

The average distance L between the surfaces of the adjacent cementite grains affects the properties of a finished surface after cutting. An average distance L of less than 0.5 µm would be likely to result in coalescence of voids at ferrite-cementite interfaces into a crack during cutting and thus degrade the surface properties of the finished surface. An average distance L of more than 10 µm would inevitably result in the formation of large cementite grains, which would deteriorate the hardenability and would also increase the cutting resistance and thus deteriorate the machinability. Thus, in the present invention, the average distance L between the surfaces of the adjacent cementite grains is limited to the range of 0.5 to 10 µm. An average distance L of 5 µm or less is preferred. The average distance L between the surfaces of the adjacent cementite grains is measured as described in the Examples.

The adjustment of the average grain size d of the cementite grains and the average distance L between the surfaces of the adjacent grains within the above respective ranges provides a high-carbon steel tube that has all of cold workability, hardenability, and machinability.

A preferred method for manufacturing a high-carbon steel tube according to the present invention will then be described.

A high-carbon steel tube having the above composition is used as a raw steel tube. The raw steel tube may be any type of steel tube having the above composition, such as a seamless steel tube, an electric-resistance-welded steel tube, or a forge-welded pipe, and may be manufactured by any process.

For example, an electric-resistance-welded steel tube is typically manufactured by a tube-making process including continuously roll-forming a steel strip into a substantially cylindrical open pipe and joining together ends of the open pipe by electric resistance welding. Although a hot-rolled steel strip having the above composition is preferred for reduced manufacturing costs, a cold-rolled steel strip can also be used without any problem.

The high-carbon steel tube used as the raw steel tube is heated to and soaked at a heating temperature higher than or equal to the Ac₃ transformation point, preferably 1,100°C or lower. A heating temperature lower than the Ac₃ transformation point would not allow carbon to diffuse sufficiently into the electric resistance weld and could therefore result in low hardness locally during quenching. A high heating temperature above 1,100°C would degrade the surface properties of the steel tube. For improved surface properties and homogeneity, the retention time (soaking time) at the heating temperature is 0.1 to 10 minutes.

After heating, the raw steel tube is subjected to stretch-reducing rolling.

Stretch-reducing rolling is preferably performed at a finishing temperature of rolling of 900°C to (Ac₁ transformation point) with a cumulative reduction in diameter of 30% to 70% within the temperature range of 900°C or lower. The cumulative reduction in diameter from the start to the end of rolling is preferably controlled within the range of 35% to 70%, depending on the size of the raw steel tube and the size of the product steel tube, to divide pearlite and thereby form fine cementite grains.

A high finishing temperature of rolling above 900°C at the surface of the steel tube would not allow spheroidizing of cementite grains because no carbide would remain after rolling. Such a high finishing temperature of rolling would also degrade the surface properties of the product steel tube. A finish temperature of rolling lower than the Ac₁ transformation point would result in the formation of excessively fine cementite grains at a narrow dispersion spacing and thus degrade the finished surface. Thus, the finishing temperature of rolling is limited to the range of 900°C to (Ac₁ transformation point), preferably the range higher than the Ac₁ transformation point. A finishing temperature of rolling of 850°C to 750°C is preferred.

A cumulative reduction in diameter of less than 30% within the temperature range of 900°C or lower would not allow spheroidizing of cementite grains because pearlite would not be sufficiently divided during stretch-reducing rolling. A cumulative reduction in diameter of more than 70% within the temperature range of 900°C or lower would result in the formation of excessively fine cementite grains and excessive work hardening and thus deteriorate the cold workability. Such a large cumulative reduction in diameter would also lead to low productivity during the manufacture of parts.

By applying the method of manufacture described above to a raw steel tube, a high-carbon steel tube can be easily manufactured that has a microstructure containing cementite grains having an average grain size and an average distance between the surfaces of adjacent cementite grains within their respective appropriate ranges.

The present invention is further illustrated by the following examples.

### [EXAMPLES]

Raw steel tubes were formed from hot-rolled steel strips (thickness: 7.0 mm) having the compositions shown in Table 1 by a tube-making process including continuously roll-forming the steel strips into substantially cylindrical open pipes and joining together the ends of the open pipes by electric resistance welding to form electric-resistance-welded steel tubes (outer diameter: 89.1 mm).

These raw steel tubes were subjected to stretch-reducing rolling under the conditions shown in Table 2 to form product steel tubes. As related-art examples, some of the steel tubes were subjected to annealing treatment at 700°C for 10 hours or to normalizing treatment at 925°C for 15 minutes. The raw steel tubes of the related-art examples were worked to a diameter of 40 mm before the above treatment.

The microstructure observation of the resulting steel tubes was performed, and they were also examined for their cold workability, hardenability, and machinability. These examinations were performed as follows.

### (1) Microstructure Observation

Each of the resulting product steel tubes was cut into a test specimen for microstructure observation. A cross-section (C cross-section) of the test specimen perpendicular to the longitudinal direction of the tube was polished and corroded with a nital corrosion solution and was observed under an electron scanning microscope (at a magnification ratio of 2,000 times). Images containing 100 or more cementite grains were captured in 10 or more fields of view. The resulting images were analyzed to determine the area of each cementite grain, and the circle equivalent diameter thereof was calculated to determine the grain size of each grain. The arithmetic average grain size of the cementite grains was calculated to determine the average grain size d of the cementite grains in the steel tube. The resulting images were also analyzed to determine the distances between the surfaces of the adjacent cementite grains, and the arithmetic average distance was calculated to determine the average distance L between the surfaces of the adjacent cementite grains in the steel tube.

### (2) Cold Workability

Each of the resulting product steel tubes was cut into a JIS No. 11 A tensile test specimen (GL: 50 mm). A tensile test was performed in accordance with JIS Z2241 to determine the tensile strength TS and the elongation El. Test specimens having an elongation El of 40% or more were rated as good, indicating "superior cold workability", and other test specimens were rated as poor.

### (3) Hardenability

Each of the resulting product steel tubes was cut into a test piece (length: 300 mm). The test piece was heated to a surface temperature of 1,000°C with a high-frequency dielectric heater in accordance with JIS G0559 and was quenched by spraying water on the outer surface of the tube. The heating conditions were as follows: the frequency was 10 kHz, and the feed rate of the induction heating coil was 20 mm/s. The quenched test piece was cut into a test specimen. The cross-sectional hardness distribution across the thickness of the test specimen was measured with a Vickers hardness tester (load: 4.9 N). The effective hardened layer depth was determined as the depth of a region having a hardness of 95% or more of the maximum hardness depending on the carbon content ^{*1)}. For ^{*1)}, the quenching hardness depending on the carbon content was determined from the following reference and conversion formula:
Reference: William C. Leslie, The Physical Metallurgy of Steels, Maruzen Co., Ltd., p. 235, Table VII.2
Hardness conversion table (HRC-to-HV hardness conversion table): SAE J417

Test specimens having a hardness of 95% or more of the maximum hardness over a region extending from the outer surface of the tube to a depth of 95% or more of the wall thickness were rated as good, indicating "superior hardenability", and other test specimens were rated as poor.

### (4) Machinability

The resulting product steel tubes were grooved (V-grooved) in the inner surface thereof. The working conditions were as follows:
Rotational speed: 100 rpm
Feed rate: 0.3 mm/rev
V-groove cut depth: 1 mm
Tip: cemented carbide tip

The cemented carbide tip was a common tungsten cemented carbide tip for cutting.

After 100 product steel tubes were grooved, the turning tool (tool) was removed and inspected for its condition. The case where the turning tool did not fractured or chipped at the edge thereof and the finished surfaces had no defect was rated as good, and the case where at least one of them occurred was rated as poor.

The results are shown in Table 3.

The high-carbon steel tubes of the inventive examples all had, a larger elongation than those of the related-art examples subjected to annealing treatment, demonstrating that they had superior cold workability. In addition, the high-carbon steel tubes of the inventive examples all had a higher hardenability than those of the related-art examples subjected to normalizing treatment, demonstrating that they had superior high-frequency hardenability. Furthermore, the high-carbon steel tubes of the inventive examples all provided less tool wear and better finished surface properties than those of the related-art examples subjected to normalizing treatment, demonstrating that they had superior machinability. In contrast, the comparative examples beyond the scope of the present invention had low cold workability, low hardenability, low machinability, or all of them.

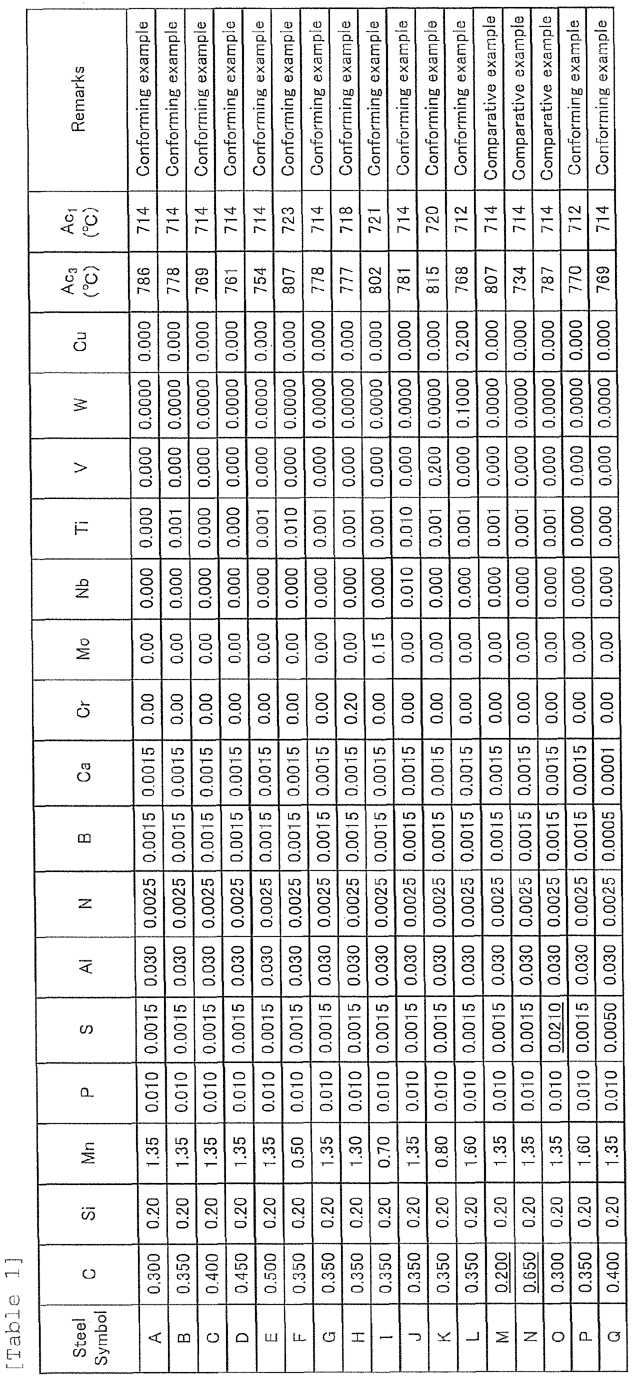

### [Table 2]

**[Table 2]**

| Table 2 | | | | | | | | | | |
|---|---|---|---|---|---|---|---|---|---|---|
| Product tube symbol | Steel symbol | Ac₃ (°C) | Ac₁ (°C) | Stretch reducing conditions | | | | Product steel tube size (mm) | Heat treatment conditions | Remarks |
| | | | | Heating temperature (°C) | Finish rolling temperature (°C) | Cumulative reduction in diameter (%) | | | | |
| | | | | | | Total | Temperature range of 900°C or lower | | | |
| 1 | A | 786 | 714 | 900 | 750 | 55 | 50 | *φ*40×t7.0 | - | Inventive example |
| 2 | A | 786 | 714 | - | - | - | | *φ*40×t7.0 | Normalizing at 920°C for 15 minutes | Comparative example |
| 3 | A | 786 | 714 | - | - | - | - | *φ*40×t7.0 | Spheroidizing annealing at 700°C for 10 hours | Comparative example |
| 4 | B | 778 | 714 | 950 | 820 | 55 | 40 | *φ*40×t7.0 | - | Inventive example |
| 5 | B | 778 | 714 | - | - | - | - | *φ*40×t7.0 | Normalizing at 920°C for 15 minutes | Comparative example |
| 6 | B | 778 | 714 | - | - | - | - | *φ*40×t7.0 | Spheroidizing annealing at 700°C for 10 hours | Com parative example |
| 7 | C | 769 | 714 | 980 | 840 | 55 | 38 | *φ*40×t7.0 | - | Inventive example |
| 8 | C | 769 | 714 | - | - | - | - | *φ*40×t7.0 | Normalizing at 920°C for 15 minutes | Comparative example |
| 9 | C | 769 | 714 | - | - | - | - | *φ*40×t7.0 | Spheroidizing annealing at 700°C for 10 hours | Comparative example |
| 10 | D | 761 | 714 | 900 | 750 | 55 | 55 | *φ*40×t7.0 | - | Inventive example |
| 11 | D | 761 | 714 | - | - | - | - | *φ*40×t7.0 | Normalizing at 920°C for 15 minutes | Comparative example |
| 12 | D | 761 | 714 | - | - | - | - | *φ*40×t7.0 | Spheroidizing annealing at 700°C for 10 hours | Comparative example |
| 13 | E | 754 | 714 | 950 | 750 | 55 | 55 | *φ*40×t7.0 | - | Inventive example |
| 14 | E | 754 | 714 | - | - | - | - | *φ*40×t7.0 | Normalizing at 920°C for 15 minutes | Comparative example |
| 15 | E | 754 | 714 | - | - | - | - | *φ*40×t7.0 | Spheroidizing annealing at 700°C for 10 hours | Comparative example |
| 16 | F | 807 | 723 | 1000 | 850 | 55 | 50 | *φ*40×t7.0 | - | Inventive example |
| 17 | G | 778 | 714 | 1010 | 850 | 55 | 35 | *φ*40×t7.0 | - | Inventive example |
| 18 | H | 777 | 718 | 950 | 820 | 55 | 38 | *φ*40×t7.0 | - | Inventive example |
| 19 | I | 802 | 721 | 900 | 750 | 55 | 50 | *φ*40×t7.0 | - | Inventive example |
| 20 | J | 781 | 714 | 900 | 670 | 55 | 55 | *φ*40×t7.0 | - | Inventive example |
| 21 | K | 815 | 720 | 950 | 800 | 55 | 50 | *φ*40×t7.0 | - | Inventive example |
| 22 | L | 768 | 712 | 900 | 780 | 55 | 50 | *φ*40×t7.0 | - | Inventive example |
| 23 | M | 807 | 714 | 900 | 750 | 55 | 50 | *φ*40×t7.0 | - | Comparative example |
| 24 | N | 734 | 714 | 950 | 800 | 55 | 42 | *φ*40×t7.0 | - | Comparative example |
| 25 | O | 787 | 714 | 960 | 810 | 55 | 40 | *φ*40×t7.0 | - | Comparative example |
| 26 | B | 778 | 714 | 1100 | 950 | 55 | 0 | *φ*40×t7.0 | - | Comparative example |
| 27 | B | 778 | 714 | 880 | 600 | 55 | 50 | *φ*40×t7.0 | - | Comparative example |
| 28 | B | 778 | 714 | 950 | 850 | 55 | 15 | *φ*40×t7.0 | - | Comparative example |
| 29 | P | 770 | 712 | 950 | 820 | 55 | 40 | *φ*40×t7.0 | - | Inventive example |
| 30 | Q | 769 | 714 | 980 | 840 | 55 | 38 | *φ*40×t7.0 | - | Inventive example |

### [Table 3]

**[Table 3]**

| Table 3 | | | | | | | | | | |
|---|---|---|---|---|---|---|---|---|---|---|
| Product tube symbol | Steel symbol | Metal microstructure before cold working | | | | Tensile properties | | Hardenability | Machinability | Remarks |
| | | Phase | | Cementite | | | | | | |
| | | Type*) | Area fraction of ferrite phase (%) | Average grain size d (µm) | Distance between surfaces of adjacent grains (µm) | TS (MPa) | EL (%) | | | |
| 1 | A | F, C | 90 | 0.4 | 1.1 | 560 | 51 | Good | Good | Inventive example |
| 2 | A | F, C, P | 10 | Not spheroidized | | 620 | 34 | Poor | Poor | Comparative example |
| 3 | A | P, F, C | 90 | 1.6 | 12 | 575 | 38 | Poor | Poor | Comparative example |
| 4 | B | F, C, P | 85 | 0.4 | 1.2 | 610 | 48 | Good | Good | Inventive example |
| 5 | B | P, F, C | 7 | Not spheroidized | | 695 | 26 | Poor | Poor | Comparative example |
| 6 | B | F, C, P | 85 | 0.8 | 11 | 593 | 32 | Poor | Poor | Comparative example |
| 7 | C | F, C, P | 80 | 0.3 | 1.9 | 635 | 46 | Good | Good | Inventive example |
| 8 | C | P, F, C | 6 | Not spheroidized | | 719 | 20 | Poor | Poor | Comparative example |
| 9 | C | F, C, P | 80 | 1.8 | 15 | 635 | 33 | Poor | Poor | Comparative example |
| 10 | D | F, C, P | 80 | 0.3 | 0.8 | 667 | 44 | Good | Good | Inventive example |
| 11 | D | P, F, C | 5 | Not spheroidized | | 765 | 17 | Poor | Poor | Comparative example |
| 12 | D | F, C, P | 80 | 1.9 | 12 | 671 | 25 | Poor | Poor | Comparative example |
| 13 | E | F, C. P. B | 75 | 0.2 | 0.6 | 695 | 43 | Good | Good | Inventive example |
| 14 | E | P, F, C | 3 | Not spheroidized | | 789 | 16 | Poor | Poor | Comparative example |
| 15 | E | F, C, P, B | 75 | 1.9 | 12 | 676 | 19 | Poor | Poor | Comparative example |
| 16 | F | F, C | 90 | 0.4 | 1.3 | 615 | 48 | Good | Good | Inventive example |
| 17 | G | F, C | 88 | 0.3 | 0.8 | 620 | 47 | Good | Good | Inventive example |
| 18 | H | F, C | 90 | 0.4 | 1 | 605 | 49 | Good | Good | Inventive example |
| 19 | I | F, C | 82 | 0.3 | 21 | 615 | 48 | Good | Good | Inventive example |
| 20 | J | F, C | 90 | 0.3 | 0.8 | 620 | 48 | Good | Good | Inventive example |
| 21 | K | F, C | 87 | 0.4 | 1 | 615 | 50 | Good | Good | Inventive example |
| 22 | L | F, C | 90 | 0.4 | 1 | 610 | 51 | Good | Good | Inventive example |
| 23 | M | F, C | 95 | 1.5 | 11 | 420 | 55 | Poor | Poor | Comparative example |
| 24 | N | F, C, P, B | 40 | 1.5 | 12 | 850 | 15 | Good | Poor | Comparative example |
| 25 | O | F, C | 90 | 1.9 | 16 | 540 | 20 | Poor | Poor | Comparative example |
| 26 | B | F, C, P | 85 | 2.1 | 13 | 610 | 38 | Poor | Poor | Comparative example |
| 27 | B | F, C, P | 85 | 1.2 | 11 | 610 | 38 | Poor | Poor | Comparative example |
| 28 | B | F, C, P | 85 | 1.3 | 15 | 610 | 25 | Poor | Poor | Comparative example |
| 29 | P | F, C, P | 84 | 0.4 | 1 | 610 | 38 | Good | Good | Inventive example |
| 30 | Q | F, C, P | 81 | 0.3 | 1.9 | 635 | 36 | Good | Good | Inventive example |

| | | | | | | | | | | |
|---|---|---|---|---|---|---|---|---|---|---|
| *) F: ferrite, C: cementite, P: pearlite, B: bainite | | | | | | | | | | |

## Claims

1. A high-carbon steel tube having a composition consisting of, by mass:
0.25% to 0.60% carbon,
0.01% to 2.0% silicon,
0.2% to 3.0% manganese,
0.001% to 0.1% aluminum,
0.001% to 0.05% phosphorus,
0.0001% to 0.02% sulfur,
0.0010% to 0.0100% nitrogen,
0.0003% to 0.0050% boron, and
0.0001% to 0.0050% calcium,
optionally at least one selected from
2.0% or less copper,
2.0% or less chromium,
2.0% or less molybdenum,
2.0% or less tungsten,
1.0% or less vanadium,
0.1% or less niobium, and
0.1% or less titanium,
the balance being iron and incidental impurities, the high-carbon steel tube having a microstructure comprising a ferrite base phase, wherein the area fraction of ferrite is 50% or more, and cementite grains finely dispersed in the base phase, wherein the average grain size d of the cementite grains is 0.1 to less than 0.5 µm, and the average distance L between surfaces of adjacent cementite grains is 0.5 to 10 µm.

2. A method for manufacturing a high-carbon steel tube, the method comprising providing a high-carbon steel tube as a raw steel tube, heating and soaking the raw steel tube, and subjecting the raw steel tube to stretch-reducing rolling into a product steel tube, the raw steel tube being a steel tube having a composition according to claim 1, wherein the raw steel tube is heated to and soaked for 0.1 to 10 minutes at an Ac₃ transformation point or higher and is then subjected to stretch-reducing rolling at a finishing temperature of rolling of 900°C to (Ac₁ transformation point) with a cumulative reduction in diameter of 30% to 70% within the temperature range of 900°C or lower.

3. The method for manufacturing a high-carbon steel tube according to Claim2, wherein the high-carbon steel tube is a high-carbon electric-resistance-welded steel tube formed by a tube-making process including continuously roll-forming a high-carbon steel strip having the composition into a substantially cylindrical open pipe and joining together ends of the open pipe by electric resistance welding.

## Patentansprüche

1. Kohlenstoffreiches Stahlrohr mit einer Zusammensetzung, die nach Ma%, aus Folgendem besteht:
0,25 % bis 0,60 % Kohlenstoff,
0,01 % bis 2,0 % Silizium,
0,2 % bis 3,0 % Mangan,
0,001 % bis 0,1 % Aluminium,
0,001 % bis 0,05 % Phosphor
0,0001 % bis 0,02 Schwefel,
0,0010 % bis 0,0100 % Stickstoff,
0,0003 % bis 0,0050 % Bor, und
0,0001 % bis 0,0050 % Kalzium,
optional mindestens eines, das aus Folgendem gewählt wird:
2,0 % oder weniger Kupfer,
2,0 % oder weniger Chrom,
2,0 % oder weniger Molybdän,
2,0 % oder weniger Wolfram,
1,0 % oder weniger Vanadium,
0,1 % oder weniger Niob, und
0,1 % oder weniger Titan,
wobei der Rest Eisen und zufällige Verunreinigungen sind, wobei das kohlenstoffreiche Stahlrohr eine Mikrostruktur aufweist, die eine Ferrit-Basisphase aufweist, wobei der Flächenanteil von Ferrit 50 % oder mehr beträgt, und Zementitkörnchen, die fein in der Basisphase verteilt sind, wobei die durchschnittliche Korngröße d der Zementitkörnchen 0,1 bis weniger als 0,5 µm beträgt und die durchschnittliche Distanz L zwischen Oberflächen von benachbarten Zementitkörnchen 0,5 bis 10 µm beträgt.

2. Herstellungsverfahren für ein kohlenstoffreiches Stahlrohr, wobei das Verfahren das Bereitstellen eines kohlenstoffreichen Stahlrohrs als ein rohes Stahlrohr umfasst, das Erwärmen und Durchwärmen des rohen Stahlrohres und das Unterziehen des rohen Stahlrohres dem Streckreduzierwalzen zu einem fertigen Stahlrohr, wobei das rohe Stahlrohr ein Stahlrohr mit einer Zusammensetzung nach Anspruch 1 ist, wobei das rohe Stahlrohr für 0,1 bis 10 Minuten auf einen Ac₃-Transformationspunkt oder höher erwärmt und durchgewärmt wird und anschließend dem Streckreduzierwalzen bei einer Fertigwalztemperatur von 900 °C bis (Ac₁-Transformationspunkt) bei einer kumulativen Reduktion des Durchmessers von 30 % bis 70 % in dem Temperaturbereich von 900 °C oder weniger unterzogen wird.

3. Herstellungsverfahren für ein kohlenstoffreiches Stahlrohr nach Anspruch 2, wobei das kohlenstoffreiche Stahlrohr ein kohlenstoffreiches widerstandsgeschweißtes Stahlrohr ist, das in einem Rohrherstellungsprozess geformt wird, der das kontinuierliche Walzformen eines kohlenstoffreichen Stahlstreifens mit der Zusammensetzung zu einem im Wesentlichen zylindrischen offenen Rohr und das Verbinden der Enden des offenen Rohres durch Widerstandsschweißen beinhaltet.

## Revendications

1. Tube en acier à haute teneur en carbone ayant une composition constituée, en masse, de :
0,25 % à 0,60 % de carbone,
0,01 % à 2,0 % de silicium,
0,2 % à 3,0 % de manganèse,
0,001 % à 0,1 % d'aluminium,
0,001 % à 0,05 % de phosphore,
0,0001 % à 0,02 % de soufre,
0,0010 % à 0,0100 % d'azote,
0,0003 % à 0,0050 % de bore et
0,0001 % à 0,0050 % de calcium,
éventuellement au moins un élément choisi parmi
2,0 % ou moins de cuivre,
2,0 % ou moins de chrome,
2,0 % ou moins de molybdène,
2,0 % ou moins de tungstène,
1,0 % ou moins de vanadium,
0,1 % ou moins de niobium et
0,1 % ou moins de titane,
le reste étant du fer et des impuretés inévitables, le tube en acier à haute teneur en carbone ayant une microstructure comprenant une phase de base ferrite, la fraction surfacique de ferrite étant de 50 % ou plus, et des grains de cémentite finement dispersés dans la phase de base, la taille de grain moyenne d des grains de cémentite allant de 0,1 à moins de 0,5 µm, et la distance moyenne L entre des surfaces de grains de cémentite adjacents allant de 0,5 à 10 µm.

2. Procédé de fabrication d'un tube en acier à haute teneur en carbone, le procédé comprenant la fourniture d'un tube en acier à haute teneur en carbone en tant que tube d'acier brut, le chauffage et le maintien à température du tube en acier brut, et la soumission du tube en acier brut à un laminage de réduction par étirage pour obtenir un tube en acier produit, le tube en acier brut étant un tube en acier ayant une composition selon la revendication 1, où le tube en acier brut est chauffé jusqu'à et maintenu pendant 0,1 à 10 minutes à un point de transformation Ac₃ ou supérieur et ensuite soumis à un laminage de réduction par étirage à une température de finissage de laminage de 900 °C au (point de transformation Ac₁) avec une réduction de diamètre cumulée de 30 % à 70 % dans la plage de température de 900 °C ou moins.

3. Procédé de fabrication d'un tube en acier à haute teneur en carbone selon la revendication 2, le tube en acier à haute teneur en carbone étant un tube en acier à haute teneur en carbone soudé par résistance électrique formé par un procédé de fabrication de tube incluant le formage par profilage en continu d'une bande d'acier à haute teneur en carbone ayant la composition pour obtenir un tube ouvert sensiblement cylindrique et l'assemblage des extrémités du tube ouvert par soudage par résistance électrique.
